# EUROPÄISCHE PATENTSCHRIFT

(11) **EP 1 035 367 B1**
(45) Veröffentlichungstag und Bekanntmachung des Hinweises auf die Patenterteilung: **12.12.2001**
(21) Anmeldenummer: 00104674.7
(22) Anmeldetag: 03.03.2000
(51) Int. Cl.: F16L 41/04, F16L 41/06

(54) **Ventil-Anbohrarmatur**
Boring device for a branching valve
Dispositif de forage pour un robinet de branchement

(30) Priorität: 12.03.1999 DE 19910998
(43) Veröffentlichungstag der Anmeldung: 13.09.2000
(73) Patentinhaber: Wilhelm Ewe GmbH & Co. KG, 38104 Braunschweig (DE)
(72) Erfinder: Brand, Siegfried, 38110 Braunschweig (DE)
(74) Vertreter: Rehmann, Klaus-Thorsten, Dipl.-Ing.

(56) Entgegenhaltungen:
- WO-A-97/23747
- DE-A- 3 744 693

## Beschreibung

Die Erfindung betrifft eine Ventil-Anbohrarmatur mit einem Gehäuse, einem auf einer Rohrleitung befestigbaren Sattel, einem Abzweigstutzen und einem in das Gehäuse einschraubbaren Ventiloberteil, in dem ein Ventilkörper und Schneidwerkzeug zum Auftrennen der Rohrleitung über eine Spindel linear verschiebbar angeordnet sind.

Eine solche Ventil-Anbohrarmatur ist beispielsweise aus der DE 44 08 817 bekannt. Sie dient dazu, von Rohrleitungen Abzweigstellen zu schaffen, beispielsweise zur Herstellung eines Hausanschlusses. Hierzu wird die Anbohrarmatur mit ihrem aus Kunststoff bestehenden Sattel auf die ebenfalls aus Kunststoff bestehende Rohrleitung aufgesetzt und fixiert. Üblicherweise sind im Sattel Heizdrähte integriert, die durch Anlegen einer Spannung soweit erhitzt werden können, daß der Sattel mit der Rohrleitung verschweißt wird und dadurch eine dichte Verbindung zwischen der Anbohrarmatur und der Rohrleitung herstellbar ist

Über das in der Anbohrarmatur angeordnete Werkzeug wird die Rohrleitung "angebohrt" und dadurch die Verbindung zwischen der Rohrleitung und dem mit dem Abzweigstutzen der Armatur verbundenen Hausanschluß hergestellt. Das Anbohrwerkzeug ist auf einem Zapfen des Ventilkörpers aufgeschraubt. Der Ventilkörper läuft in einem im Gehäuse vorgesehenen Innengewinde. Wird er in Drehung versetzt, senkt sich der Ventilkörper zusammen mit dem daran festgeschraubten Werkzeug drehend in Richtung der Rohrleitung ab und bohrt diese mit dem Werkzeug an. Wird der Ventilkörper weiter gedreht, senkt er sich auf den im unteren Teil des Gehäuses vorgesehenen Ventilsitz ab und dichtet die Anbohrstelle.

Nachteilig bei dieser Ausgestaltung ist es, daß die Dichtung des Ventilkörpers drehend auf den Ventilsitz aufgesetzt wird und somit Verschleiß unterworfen ist, der eine Zerstörung der Dichtung zur Folge haben kann. Außerdem ist die Gewindeverbindung zwischen Ventilkörper und Gehäuse unmittelbar dem Medium ausgesetzt, wenn das Ventil geöffnet wird, so daß Medium oder mitgerissene Schwebstoffe Schmutzpartikel in die Gewindegänge gelangen können, was zum Versagen der Gewindeverbindung oder Schwergängigkeit beim Absperren bzw. Öffnen des Ventiles führt.

Die WO 97/23747 offenbart eine Ventil-Anbohrarmatur bei dem der Ventilkörper und das daran befestigte Werkzeug nur linear absenkbar sind, so daß das Ventil ohne eine Drehbewegung auszuführen auf dem Ventilsitz zur Anlage gelangt. Nachteilig an dieser Ausbildung ist, daß das Werkzeug die "Anbohrstelle" an der Rohrleitung ausstanzt, so daß Grate und grobe Spähne entstehen können, die in der Rohrleitung verbleiben und dort weggespült werden, und/oder den "Anbohrdurchmesser" verengen.

Von dieser Problemstellung ausgehend soll die eingangs beschriebene Anbohrarmatur verbessert werden.

Zur Problemlösung zeichnet sich eine gattungsgemäße Ventil-Anbohrarmatur dadurch aus, daß der Ventilkörper und das Werkzeug zueinander verdrehbar angeordnet sind, die Spindel drehfest aber axial verschiebbar mit dem Werkzeug verbunden und der Ventilkörper mit einem Gewinde zur Aufnahme der Spindel versehen ist, so daß bei Drehung der Spindel das Werkzeug eine kombinierte rotatorische und translatorische und der Ventilkörper eine rein translatorische Bewegung ausführt, sowie der Ventilkörper drehfest im Ventiloberteil angeordnet ist.

Durch diese Ausgestaltung wird die Rohrleitung in gewünschter vorteilhafterweise drehend aufgebohrt, während sich zur Abdichtung der Ventilkörper auf seinen Sitz ausschließlich linear absenkt, so daß er keinem Verschleiß unterworfen ist. Außerdem liegt die Gewindeverbindung innerhalb des Ventilköpers, so daß diese beim öffnen des Ventiles keinem einströmenden Medium ausgesetzt ist, was die Lebensdauer erhöht und lange eine leichte Bedienbarkeit gewährleistet.

Vorzugsweise ist der Ventilkörper hohl ausgebildet und nimmt in seinem Inneren einen Schaft des Werkzeugs koaxial auf. Die Bauteile sind dann ineinander einsteckbar und leicht montierbar. Der Ventilkörper ist mit einem in dem Ventiloberteil angeordneten Schaft versehen, der vorzugsweise eine polygonale Umfangskontur aufweist. Das Gehäuseoberteil weist in seinem Inneren eine hierzu korrespondierende polygonale Ausbildung auf. Die drehfeste Verbindung kann aber auch über eine Nut/Federverbindung oder dergleichen hergestellt werden.

Der Schaft des Werkzeugs ist vorzugsweise hohl ausgebildet, und weist in seinem Inneren mindestens eine Führungsnase auf, die in eine hierzu korrespondierende in axialer Richtung der Spindel vorgesehenen Nut eingreift. Durch diese Ausbildung ist eine einfache drehfeste Verbindung zwischen Werkzeug und Spindel möglich.

Insbesondere vorzugsweise ist der Schaft mit zwei Führungsnasen und die Spindel mit zwei Nuten jeweils diametral angeordnet versehen.

Die Abdichtung des Ventilkörpers gegenüber dem Schaft des Werkzeugs erfolgt vorzugsweise über einen O-Ring.

Mit Hilfe einer Zeichnung soll ein Ausführungsbeispiel der Erfindung nachfolgend näher erläutert werden. Es zeigt:

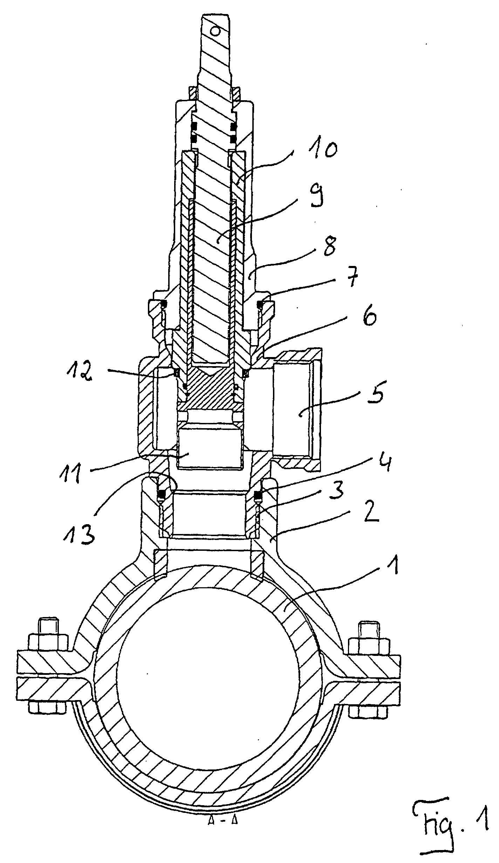

- Figur 1 -: den Axialschnitt durch eine auf eine Rohrleitung aufgesetzte Ventil-Anbohrarmatur;
- Figur 2 -: eine Einzelheit aus Figur 1 mit eingefahrenem Ventil/Werkzeug;
- Figur 3 -: die Darstellung Figur 2 mit ausgefahrenem Ventil/Werkzeug;

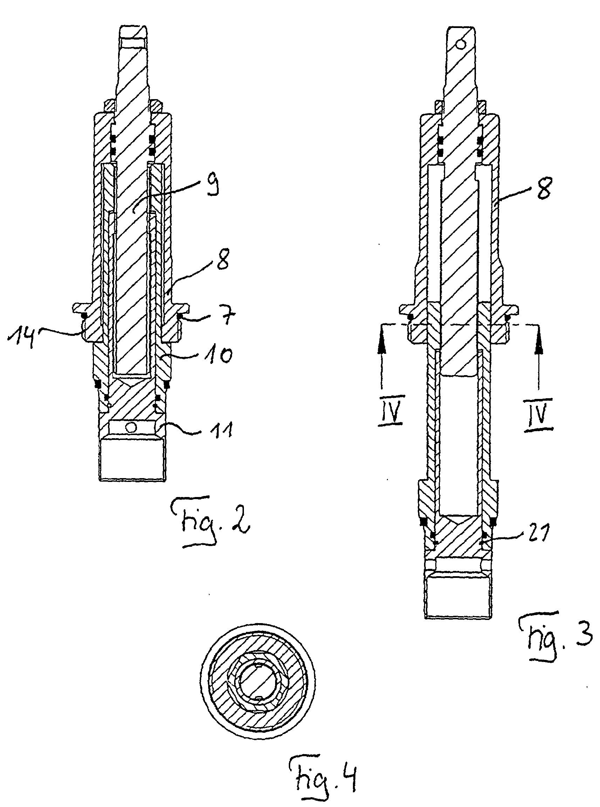

- Figur 4 -: den Schnitt entlang der Linie IV-IV nach Figur 3;

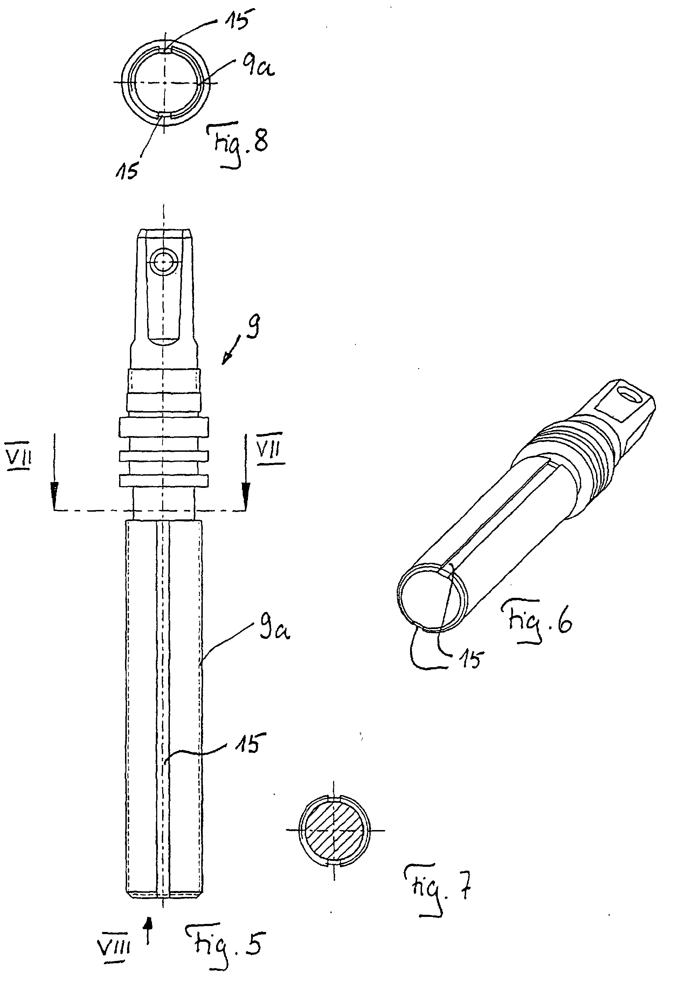

- Figur 5 -: die Spindel in Seitenansicht
- Figur 6 -: eine perspektivische Darstellung der Spindel;

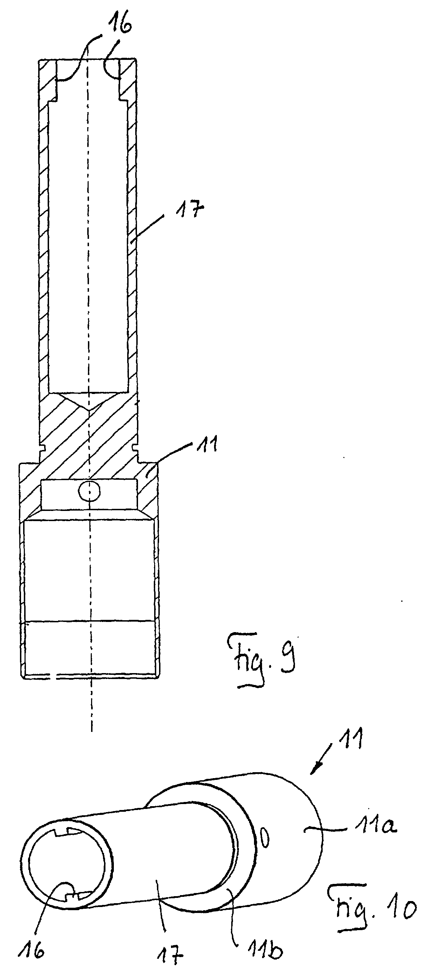

- Figur 7 -: den Schnitt entlang der Linie VII-VII nach Figur 5;
- Figur 8 -: die Ansicht der Spindel gemäß Sichtpfeil VIII nach Figur 5;
- Figur 9 -: das Werkzeug im Axialschnitt;

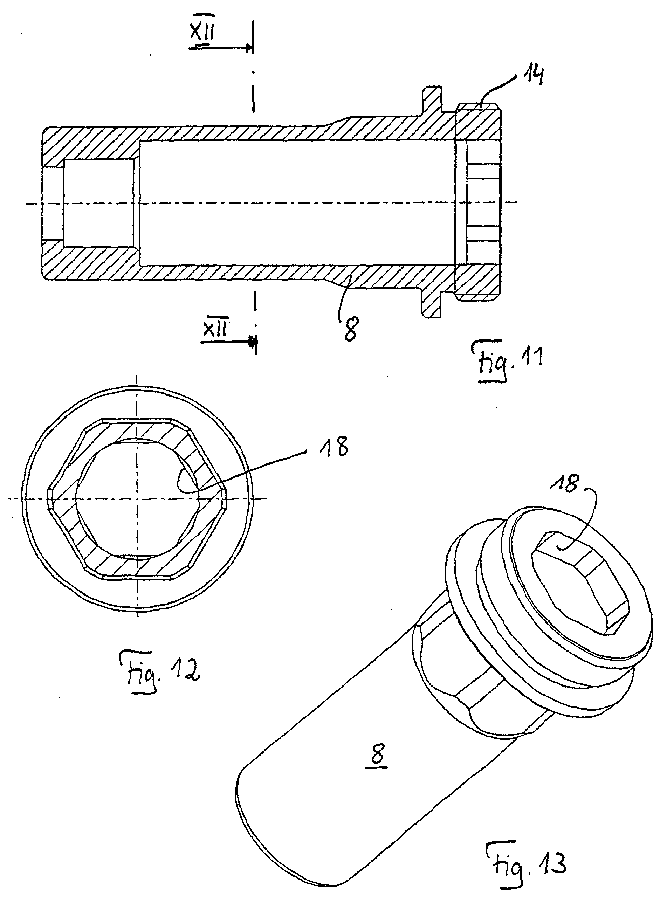

- Figur 10 -: eine perspektivische Darstellung des Werkzeugs;
- Figur 11 -: das Ventiloberteil im Axialschnitt;

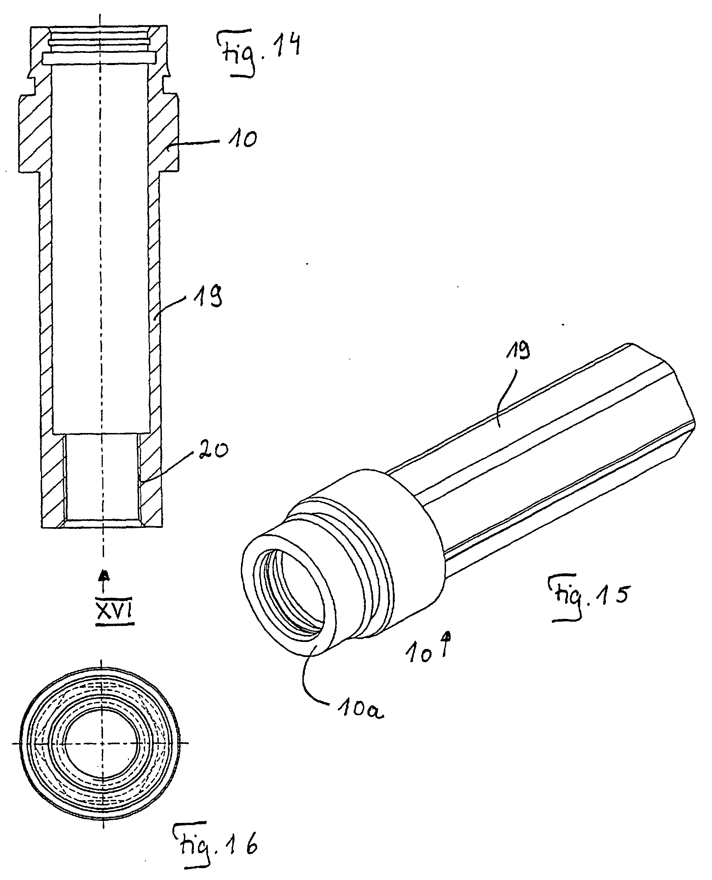

- Figur 12 -: den Schnitt entlang der Linie XII-XII nach Figur 11;
- Figur 13 -: das Ventiloberteil in perspektivischer Darstellung;
- Figur 14 -: den Ventilkörper im Axialschnitt;
- Figur 15 -: eine perspektivische Darstellung des Ventilkörpers;
- Figur 16 -: die Ansicht gemäß Sichtpfeil XVI nach Figur 14;
- Figur 17 -: eine Einzelheit aus Figur 1 in vergrößerter Darstellung.

Über den Sattel 2 wird die Ventil-Anbohrarmatur mit der Rohrleitung 1 verbunden. In den Sattel 2 wird über das Gewinde 3 das Gehäuse 6 eingeschraubt. Die Abdichtung zwischen dem Sattel 2 und dem Gehäuse 6 erfolgt über den O-Ring 4. In das Gehäuse 6 ist das Ventiloberteil 8 einschraubbar. Die Abdichtung zwischen dem Ventiloberteil 8 und dem Gehäuse 6 erfolgt über den O-Ring 7. Im Gehäuseoberteil ist eine Spindel 9 drehbar gelagert, die in ein im Schaft 19 des Ventilkörpers 10 vorgesehenes Gewinde 20 einschraubbar ist.

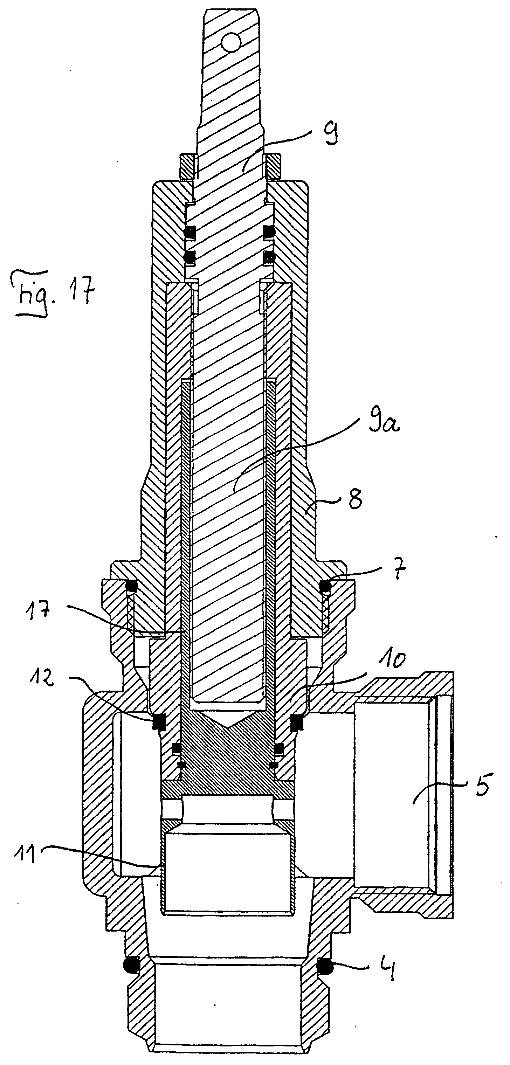

Der Schaft 19 des Ventilkörpers 10 hat eine äußere polygonale Form, wie Figur 15 zeigt. Im Inneren des Ventiloberteils 8 ist ein hierzu korrespondierendes polygonales Profil 18 vorgesehen. Über dieses polygonale Profil 18 ist der Ventilkörper 10 drehfest mit dem Ventiloberteil 8 verbunden.

Der Ventilkörper 10 ist hohl gebohrt. Das Werkzeug 11 ist mit einem Schaft 17 versehen, der gegenüber dem Werkzeugkörper 11a schmaler ausgebildet ist. Mit dem Schaft 17 ist das Werkzeug 11 koaxial in den Ventilkörper 10 eingesteckt und im Inneren gelagert. Über einen O-Ring 21 ist der Ventilkörper 10 gegenüber dem Schaft 17 des Werkzeugs 11 abgedichtet. Im Inneren des hohlgebohrten Schaftes 17 sind zwei diametrale Führungsnasen 16 vorgesehen. Die Spindel 9 weist an Ihrer Außenseite 2 diametrale Nuten 15 auf, die in axialer Richtung verlaufen und das Gewinde 9a der Spindel 9 unterbrechen. Die Nuten 15 sind so ausgebildet, daß sie mit den Führungsnasen 16 des Werkzeugs 11 zusammenwirken können.

Über die Führungsnasen 16 bzw. die Nuten 15 wird eine drehfeste Verbindung zwischen der Spindel 9 und dem Werkzeug 11 hergestellt. Über das Gewinde 20 wird der Ventilkörper 10 mit der Spindel (9) verbunden. Wird die Spindel 9 gedreht, dreht sich mit ihr das Werkzeug 10. Da der Schaft 19 des Ventilkörpers 10 drehfest im Ventiloberteil 8 angeordnet ist, führt eine Drehbewegung der Spindel 9 zu einer rein lineraren Verlagerung des Ventilkörpers 10 bzw. seines Schaftes 19 im Ventiloberteil 8. Gleichzeitig wird das Werkzeug 11, das über den am Werkzeugkörper 11a ausgebildeten Absatz 11b an der ringförmigen Anschlagfläche 10a anliegt ebenfalls axial verlagert. Durch die drehfeste Verbindung mit der Spindel 9 führt das Werkzeug 11 zusätzlich zu der translatorischen auch eine rotatorische Bewegung aus.

### Bezugszeichenliste

- 1: Rohrleitung
- 2: Sattel
- 3: Gewinde
- 4: Dichtung / O-Ring
- 5: Abzweigstutzen
- 6: Gehäuse
- 7: Dichtung / O-Ring
- 8: Ventiloberteil
- 9: Spindel
- 9a: Gewinde
- 10: Ventilkörper
- 10a: Anschlagfläche
- 11: Werkzeug
- 11a: Werkzeugkörper
- 11b: Absatz
- 12: Ventildichtung
- 13: Ventilsitz
- 14: Außengewinde
- 15: Nut
- 16: Führungsnase
- 17: Schaft
- 18: polygonales Profil
- 19: Schaft
- 20: Gewinde
- 21: O-Ring

## Patentansprüche

1. Ventil-Anbohrarmatur mit einem Gehäuse (6), einem auf einer Rohrleitung (1) befestigbaren Sattel (2), einem Abzweigstutzen (5) und einem in das Gehäuse (6) einschraubbaren Ventiloberteil (8), in dem ein Ventilkörper (10) und ein Werkzeug (11) zum Auftrennen der Rohrleitung (1) über eine Spindel (9) linear verschiebbar angeordnet sind, **dadurch gekennzeichnet, daß** der Ventilkörper (10) und das Werkzeug (11) zueinander verdrehbar angeordnet sind, **daß** die Spindel (9) drehfest aber axial verschiebbar mit dem Werkzeug (11) verbunden ist, **daß** der Ventilkörper (10) mit einem Gewinde (20) zur Aufnahme der Spindel (9) versehen ist, so daß bei Drehung der Spindel (9) das Werkzeug (11) eine kombinierte rotatorische und translatorische und der Ventilkörper (10) eine rein translatorische Bewegung ausführt, und **daß** der Ventilkörper (10) drehfest im Ventiloberteil (8) angeordnet ist.

2. Ventil-Anbohrarmatur nach Anspruch 1, **dadurch gekennzeichnet, daß** der Ventilkörper (10) hohl ausgebildet ist und in seinem Inneren einen Schaft (17) des Werkzeugs (11) koaxial aufnimmt.

3. Ventil-Anbohrarmatur nach Anspruch 1, **dadurch gekennzeichnet, daß** der Ventilkörper (10) mit einem drehfest in dem Ventiloberteil (8) anordnenbaren Schaft (19) versehen ist.

4. Ventil-Anbohrarmatur nach Anspruch 3, **dadurch gekennzeichnet, daß** der Schaft (19) eine polygonale Umfangskontur aufweist.

5. Ventil-Anbohrarmatur nach Anspruch 2, **dadurch gekennzeichnet, daß** der Schaft (17) des Werkzeugs (11) hohl ist und in seinem Inneren mindestens eine Führungsnase (16) aufweist, die in eine korrespondierende in axialer Richtung in der Spindel (9) vorgesehenden Nut (15) eingreift.

6. Ventil-Anbohrarmatur nach Anspruch 5, **dadurch gekennzeichnet, daß** im Schaft (17) zwei Führungsnasen (16) und in der Spindel (9) zwei Nuten (15) jeweils diametral angeordnet sind.

7. Ventil-Anbohrarmatur nach einem oder mehreren der vorstehenden Ansprüche, **dadurch gekennzeichnet, daß** der Ventilkörper (10) gegenüber dem Schaft (17) des Werkzeugs (11) mit einem O-Ring (21) gedichtet ist.

## Claims

1. Boring device for a branching valve with a housing (6), a saddle (2) which can be fixed on a pipeline (1), a branching stub connection (5) and a valve upper component (8) which can be screwed into the housing (6), a valve body (10) and a tool (11) to open up the pipeline (1) via a spindle (9) being arranged in the said valve upper section so that they can be displaced in a linear manner, **characterised in that** the valve body (10) and the tool (11) are arranged so that they can turn in respect of each other, **that** the spindle (9) is connected to the tool (11) so that it cannot turn but can be displaced axially, **that** the valve body (10) is provided with a thread (20) to take the spindle (9) so that when the spindle (9) turns, the tool (11) makes a combined rotatory and translatory movement and the valve body (10) makes a purely translatory movement and **that** the valve body (10) is arranged so that it cannot turn in the upper component (8) of the valve.

2. Boring device for a branching valve according to claim 1, **characterised in that** the valve body (10) is hollow and holds a shaft (17) of the tool (11) coaxially inside the said body.

3. Boring device for a branching valve according to claim 1, **characterised in that** the valve body (10) is provided with a shaft (19), which can be arranged in the upper component (8) of the valve so that it cannot turn.

4. Boring device for a branching valve according to claim 3, **characterised in that** the contour of the circumference of the shaft (19) is polygonal.

5. Boring device for a branching valve according to claim 2, **characterised in that** the shaft (17) of the tool (11) is hollow and has at least one guide projection (16) inside, which engages in a corresponding groove (15) provided in the axial direction in the spindle (9).

6. Boring device for a branching valve according to claim 5, **characterised in that** two guide projections (16) are arranged in the shaft (17) and two grooves (15) are arranged in the spindle (9), in a position diametrically opposed to each other.

7. Boring device for a branching valve according to one or more of the above claims, **characterised in that** the valve body (10) is sealed by an O-seal (21) in respect of the shaft (17) of the tool (11).

## Revendications

1. Robinet de branchement avec dispositif de forage, comprenant un corps (6), une semelle (2) pouvant être fixée sur une conduite (1), un raccord de branchement (5) et une superstructure de robinet (8), pouvant être vissée dans le corps (6) et dans laquelle un obturateur (10) et un outil (11) de perforation de la conduite (1) sont montés en déplacement linéaire par l'intermédiaire d'un arbre (9), **caractérisé en ce que** l'obturateur (10) et l'outil (11) sont agencés rotatifs l'un par rapport à l'autre, **en ce que** l'arbre (9) est lié en rotation avec l'outil (11) mais axialement coulissant par rapport à celui-ci, **en ce que** l'obturateur (10) est muni d'un filetage (20) pour recevoir l'arbre (9), de sorte que par rotation de l'arbre (9) l'outil (11) effectue un mouvement combiné de rotation et de translation et l'obturateur (10) un mouvement de translation pure, et **en ce que** l'obturateur (10) est agencé fixe en rotation dans la superstructure (8).

2. Robinet de branchement avec dispositif de forage selon la revendication 1, **caractérisé en ce que** l'obturateur (10) est réalisé creux et reçoit coaxialement à son intérieur une tige (17) de l'outil (11).

3. Robinet de branchement avec dispositif de forage selon la revendication 1, **caractérisé en ce que** l'obturateur (10) est muni d'une tige (19) montée fixe en rotation dans la superstructure (8).

4. Robinet de branchement avec dispositif de forage selon la revendication 3, **caractérisé en ce que** la tige (19) présente un contour périphérique polygonal.

5. Robinet de branchement avec dispositif de forage selon la revendication 2, **caractérisé en ce que** la tige (17) de l'outil (11) est creuse et présente à son intérieur au moins un ergot de guidage (16) qui s'engage dans une rainure correspondante (15) prévue en direction axiale dans l'arbre (9).

6. Robinet de branchement avec dispositif de forage selon la revendication 5, **caractérisé en ce que** deux ergots de guidage (16) sont prévus diamétralement dans la tige (17) et deux rainures (15) sont prévues diamétralement dans l'arbre (9).

7. Robinet de branchement avec dispositif de forage selon une ou plusieurs des revendications précédentes, **caractérisé en ce que** l'obturateur (10) est rendu étanche par rapport à la tige (17) de l'outil (11) par un joint torique.
